(19) **Europäisches Patentamt**
**European Patent Office**
**Office européen des brevets**

(11) **EP 4 729 658 A1**

(12) **EUROPEAN PATENT APPLICATION**

(43) Date of publication:
**22.04.2026 Bulletin 2026/17**

(21) Application number: **24207600.8**

(22) Date of filing: **18.10.2024**

(51) International Patent Classification (IPC):
**C25B 1/23** (2021.01)     **C25B 3/03** (2021.01)
**C25B 3/07** (2021.01)     **C25B 3/26** (2021.01)
**C25B 11/032** (2021.01)     **C25B 15/08** (2006.01)

(52) Cooperative Patent Classification (CPC):
**C25B 3/07; C25B 1/00; C25B 1/23; C25B 3/03;
C25B 3/26; C25B 11/032; C25B 15/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Imec VZW**
**3001 Leuven (BE)**

• **Katholieke Universiteit Leuven**
**KU Leuven Research & Development**
**3000 Leuven (BE)**

(72) Inventors:
• **VAN LEEUWEN, Marieke**
**3000 Leuven (BE)**
• **VEREECKEN, Philippe**
**3321 Hoegaarden (BE)**

(74) Representative: **Winger**
**Mouterij 16 bus 101**
**3190 Boortmeerbeek (BE)**

(54) **METHOD AND SYSTEM FOR CO2 REDUCTION**

(57)     The invention relates to a method and system for gas-phase CO2 reduction using a composite electrolyte (210) comprising an ionic liquid (212) incorporated within a mesoporous host matrix (211). The composite electrolyte (210) functions as a dual sorbent for $CO_2$ and $H_2O$ while providing ionic conductivity, facilitating the electrochemical reduction of $CO_2$ directly from a gas stream.

The method involves sorption of $CO_2$ into the composite electrolyte (210), followed by electrochemical reduction at an interface with a catalyst (220). The system integrates the composite electrolyte (210) into a sorbent-catalyst assembly (230)), enabling efficient $CO_2$ reduction and simplifying the system architecture by combining sorption and conduction in one material.

FIG. 5

EP 4 729 658 A1

**Description**

**Field of the invention**

The invention relates to the field of carbon capture and utilization (CCU) technologies and electrochemical $CO_2$ reduction. More specifically it relates to a method and system for $CO_2$ reduction.

**Background of the invention**

In recent years, there has been significant interest in developing technologies for carbon capture and utilization (CCU) as part of global efforts to mitigate the effects of rising $CO_2$ levels in the atmosphere. These technologies aim to capture $CO_2$ from various sources and convert it into valuable products through chemical and electrochemical processes. However, many existing approaches face challenges related to the efficiency of $CO_2$ capture, the availability of reactants for electrochemical reactions, and overall system performance.

One of the key challenges is ensuring sufficient $CO_2$ availability at the reaction site to improve the efficiency of conversion processes. Additionally, balancing the interaction of multiple reactants in electrochemical systems can be difficult, particularly when there are competing processes that reduce overall performance. Researchers have been exploring different materials and system configurations to overcome these obstacles and improve the practicality and scalability of CCU technologies.

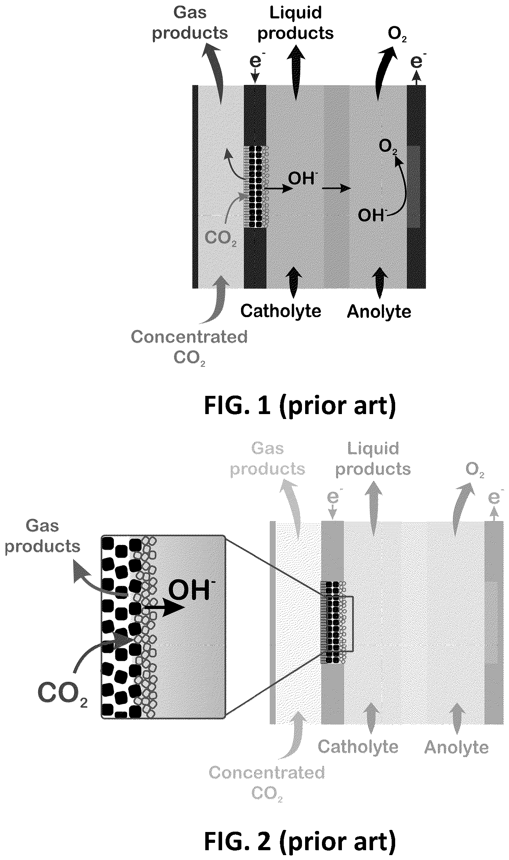

FIG. 1 illustrates a prior art electrochemical cell used for $CO_2$ reduction. The cell includes a cathode exposed to a concentrated stream of $CO_2$ on its left side, with a catholyte in contact on its right side. On the opposite side, the anode is in contact with an anolyte, and the catholyte and anolyte are separated by a membrane. The membrane allows ion exchange while preventing the direct mixing of the anolyte and catholyte solutions.

In an alkaline environment, $CO_2$ undergoes reduction at the cathode in the presence of water and electrons. The reaction in an alkaline environment is represented by the equation:

$$aCO_2 + be^- + cH_2O \rightarrow Product + bOH^-$$

In an acidic environment, $CO_2$ reacts with protons and electrons at the cathode, leading to the formation of a product and water:

$$aCO_2 + be^- + bH^+ \rightarrow Product + cH_2O$$

In an alkaline environment, hydroxide ions are converted at the anode into $O_2$, water, and electrons:

$$bOH^- \rightarrow \frac{1}{2}cO_2 + be^- + cH_2O$$

In an acidic environment, water is oxidized at the anode, forming $O_2$, protons, and electrons:

$$cH_2O \rightarrow \frac{1}{2}cO_2 + be^- + bH^+$$

The overall reaction in the electrochemical cell is the reduction of $CO_2$ into various products (such as formic acid, carbon monoxide, methanol, methane, ethylene, or ethanol) and oxygen:

$$aCO_2 \rightarrow Product + O_2$$

The cell operates by applying an electrical potential between the cathode and the anode, which drives the reduction of $CO_2$ at the cathode and oxidation reactions at the anode. The membrane separating the anolyte and catholyte compartments ensures that the anions or cations generated in the respective compartments are exchanged efficiently, while the product and oxygen are generated separately. Different products can be formed depending on the catalytic materials used at the electrodes and the specific operational conditions (e.g., pH, temperature, and applied voltage).

FIG. 2 presents a detailed view of the cathode structure used in the prior art $CO_2$ reduction cell depicted in FIG. 1. The cathode contains a porous layer that allows the gas-phase $CO_2$ to pass through toward the catalyst. The state-of the-art hydrophobic gas diffusion electrodes (GDEs) were developed to create a so-called triple phase boundary. In contrast to electroreduction entirely in a liquid medium, with dissolved $CO_2$ as reaction media, the hydrophobic electrode aims at increasing contact between gas reactant, electrons and ions. However, recent research has shown that even in the hydrophobic GDE set-up, with the cathode separating a gas feed and liquid electrolyte, $CO_2$ mass transport limitations over a thin wetted layer at the catalyst are observed.

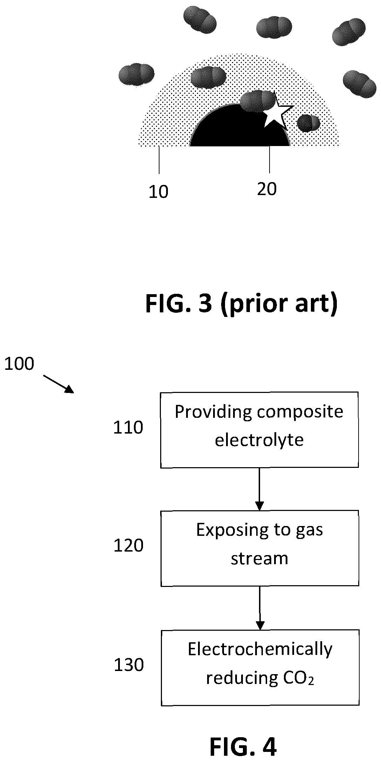

FIG. 3 presents a schematic representation of a thin electrolyte layer (10) in contact with a catalyst (20), which illustrates how wetting limits the availability of $CO_2$ for reduction at the catalyst surface. This setup is typical in gas diffusion electrode systems, where a liquid electrolyte partially wets the catalyst layer, forming a thin film that $CO_2$ must diffuse through before reaching the active sites for electrochemical reduction. This limits the availability of $CO_2$ at the catalyst layer where electrochemical reduction occurs.

At a partial pressure of $CO_2$ ($P_{CO2}$) of 0.15 bar, the solubility of $CO_2$ in the electrolyte is approximately 4.5 mM. This low solubility imposes a limit on the concentration of $CO_2$ that can be transported to the catalyst, thereby limiting the rate of the electrochemical reduction reaction. The diffusion-limited current density equation can be expressed as:

$$i = \frac{nFD(c_b - c_s)}{\partial}$$

In this equation i is the current density which is indicative of the rate of $CO_2$ reduction, n is the number of electrons involved in the reaction, F is the Faraday constant, D is the diffusion coefficient of $CO_2$ in the electrolyte, $c_b$ is the bulk concentration of $CO_2$, $c_s$ is the surface concentration of $CO_2$ at the catalyst interface and $\partial$ is the diffusion layer thickness. The low solubility of $CO_2$ in the liquid electrolyte, coupled with the need for diffusion through the wet layer, restricts the rate of $CO_2$ reduction, as indicated by the diffusion-limited current density equation.

Membrane Electrode Assemblies provide an optimized alternative to the state-of-the-art shown in Fig. 1 by providing intimate contact between the electrodes and membrane. Improved performance was shown in studies exploring liquid-free operation at the cathode, with liquid anolyte. Permeation of electrolyte through the membrane typically ensure ionic contact at the cathode in these electrochemical cells. However, due to the liquid permeation, also these set-ups for $CO_2$ reduction face several challenges that can limit the availability of $CO_2$ at the catalyst surface.

Efforts, therefore, continue to focus on developing methods that optimize the capture and reduction of $CO_2$, while ensuring the process remains energy-efficient and adaptable to various industrial applications. These advancements are critical for the successful implementation of carbon capture and utilization technologies in real-world scenarios.

**Summary of the invention**

It is an object of embodiments of the present invention to provide a good method and system for gas phase $CO_2$ reduction.

The above objective is accomplished by a method and device according to the present invention.

In a first aspect, embodiments of the present invention relate to a method for gas-phase $CO_2$ reduction. The method involves providing a composite electrolyte with an ionic liquid incorporated within a mesoporous host matrix, where the composite electrolyte functions as a dual sorbent for $CO_2$ and $H_2O$ and provides ionic conductivity. The composite electrolyte is exposed to a gas stream containing $CO_2$, which is sorbed into the composite electrolyte. The sorbed $CO_2$ is then electrochemically reduced at an interface between the composite electrolyte and a catalyst.

It is an advantage of embodiments of the present invention that $CO_2$ electroreduction is facilitated directly from a gas-phase stream, combining sorption and ionic conduction in a single material, which improves the reaction's speed and efficiency by enhancing $CO_2$ availability.

In embodiments of the present invention the gas stream may also contain $H_2O$, which is sorbed into the composite electrolyte. In embodiments of the present invention the composite electrolyte acts as a sink or source for water involved in the electrochemical reaction.

In embodiments of the present invention the composite electrolyte comprises a hydrophobic modification of the host matrix for maintaining decoupled transport of $CO_2$ and $H_2O$ within the composite electrolyte by steering the amount of $H_2O$ uptake.

It is an advantage of embodiments of the present invention that non-competitive capture of $CO_2$ and $H_2O$ is enabled. Where in embodiments of the present invention reference is made to non-competitive capture of $CO_2$ and $H_2O$ this means that the sorption of $CO_2$ is not significantly affected by the presence of $H_2O$, both in terms of unchanged absolute uptake of $CO_2$ in dry vs. humid environment, and lack of $CO_2$ displacement by $H_2O$ over time.

In embodiments of the present invention the mesoporous host comprises silica.

In embodiments of the present invention the silica host matrix is modified with methyl sidechains to decrease the hydrophilicity of the host matrix. As a result thereof the hydrophilicity of the composite electrolyte is decreased.

It is an advantage of embodiments of the present invention that modifying silica with methyl sidechains decreases its hydrophilicity and therefore allows to tune the $H_2O$ uptake.

In embodiments of the present invention the modification of the silica host matrix is achieved using methyltrimethoxysilane.

In embodiments of the present invention the ratio of methyltrimethoxysilane (MTMS) to tetraethyl orthosilicate (TEOS) used to form the silica matrix is varied to decrease the hydrophilicity of the host matrix and thereby of the composite.

It is an advantage of embodiments of the present invention that the ability to decrease the hydrophilicity of the host matrix allows for optimization based on different operational conditions, such as the humidity of the gas stream or the desired $CO_2$ adsorption properties, making the system adaptable for various applications. It allows for example to perform $CO_2$ reduction entirely from the gas phase.

In embodiments of the present invention the ionic liquid is selected based on its ability to sorb $CO_2$ via a sorption mechanism. The ionic liquid may for example be selected from the group comprising bis(trifluorosulfonyl)imide-based ionic liquids.

In a second aspect, embodiments of the present invention relate to a system for gas-phase $CO_2$ reduction. The system includes a composite electrolyte comprising an ionic liquid incorporated in a mesoporous host matrix, which provides ionic conductivity and functions as a dual sorbent for $CO_2$ and $H_2O$. The system also includes an sorbent-catalyst assembly with a catalyst interfacing with the composite electrolyte, where $CO_2$ sorbed in the composite electrolyte is reduced at the interface between the composite electrolyte and the catalyst.

In embodiments of the present invention the composite electrolyte is hydrophobically modified to decouple the transport of $CO_2$ and $H_2O$.

In embodiments of the present invention the mesoporous host matrix comprises silica.

In embodiments of the present invention the silica host matrix is modified with methyl sidechains to decrease the hydrophilicity.

In embodiments of the present invention the modification of the silica host matrix is achieved using methyltrimethoxysilane.

In embodiments of the present invention the ratio of methyltrimethoxysilane to tetraethyl orthosilicate used to form the silica matrix is selected to obtain a desired hydrophobicity of the host matrix.

In embodiments of the present invention the ionic liquid is selected from the group consisting of bis(trifluorosulfonyl)imide-based ionic liquids.

In embodiments of the present invention the system comprises a gas distribution system for supplying gas to the composite electrolyte and for retrieving gas from the composite electrolyte.

It is an advantage of a system in accordance with embodiments of the present invention that it provides a compact and integrated solution for gas-phase $CO_2$ reduction, utilizing a composite material that performs dual functions of gas sorption and transport, and ionic conduction, simplifying the system architecture and increasing its efficiency.

It is an advantage of embodiments of the present invention that the composite electrolyte is applicable via various coating methods.

Additionally, the composite may function as a separator for anodic and cathodic products with the sorbent composite electrolyte adopting the additional role of membrane, like in state-of-the-art set-ups (e.g. in a Membrane Electrode Asssembly type of set-up). The use of the sorbent composite electrolyte in this type of asssemblies make the role of liquid electrolyte redundant, and therefore enables to work in entirely gas-fed and liquid-free set-ups. Removing the liquid anolyte and catholyte plays an important role in increasing the performance of the gas-phase $CO_2$ reduction system by removing $CO_2$ solubility limitations in the aqueous phase.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

## Brief description of the drawings

FIG. 1 shows a schematic drawing of a prior art $CO_2$ reduction cell.

FIG. 2 shows a zoomed in schematic drawing of the cathode of FIG. 1.

FIG. 3 shows a schematic drawing of a catalyst and thin electrolyte layer for illustrating that wetting limits $CO_2$ availability at the catalyst.

FIG. 4 shows an exemplary flow chart of a method in accordance with embodiments of the present invention.

FIG. 5 shows an example of the gas/sorbent composite electrolyte/ catalyst interface at the cathode comprising a composite electrolyte interfacing with a catalyst for a gas-phase $CO_2$ reduction system in accordance with embodiments of the present invention.

FIG. 6 shows a graph illustrating the $CO_2$ uptake of a composite material, in accordance with embodiments of the present invention.

FIG. 7 shows graphs illustrating the $CO_2$ uptake at different $CO_2$ partial pressures for different composite electrolytes, with different ionic liquid-to-silica molar ratios, denoted x, and with different MTMS-to-TEOS molar ratios, denoted y.

FIG. 8 illustrates water uptake for composite electrolytes, with different ionic liquid-to-silica molar ratio x, and with different MTMS-to-TEOS molar ratio y, in accordance with embodiments of the present invention.

FIG. 9 shows graphs illustrating $CO_2$ uptake in a composite electrolyte, in accordance with embodiments of the present invention, as a function of water content for different MTMS-to-TEOS molar ratios, denoted y.

FIG. 10 shows a schematic drawing of an ATR-FTIR (Attenuated Total Reflectance - Fourier Transform Infrared Spectroscopy) set-up under a gas flow.

FIG. 11 shows the differential absorbance spectrum measured under dry $CO_2$ in an ATR-FTIR flow cell set-up for $CO_2$ gas as such (bottom curve) and for a $CO_2$ sorbent nanocomposite coating (top curve).

FIG. 12 shows the differential absorbance spectrum measured under humid $CO_2$ in an ATR-FTIR flow cell set-up for a $CO_2$ sorbent nanocomposite coating with ionic liquid-to-silica molar ratio of x=2, and MTMS-to-TEOS molar ratios of y=0 or y=1.

FIG. 13 shows a schematic drawing of a a sorbent-catalyst assembly for gas phase $CO_2$ reduction in accordance with embodiments of the present invention.

FIG. 14 shows a graph illustrating the production rate for Hydrogen evolution reaction and for $CO_2$ reduction from composite electrolytes in accordance with embodiments of the present invention.

FIG. 15 shows a conceptual drawing of a sorbent-catalyst assembly in a membrane electrode configuration comprising an electrode on each side of the composite electrolyte of a system for gas-phase reduction, in accordance with embodiments of the present invention.

FIG. 16 shows a practical implementation of an electrolyzer comprising a sorbent-catalyst assembly in a membrane electrode configuration, comprising an electrode on each side of the composite electrolyte of a system for gas-phase reduction, in accordance with embodiments of the present invention.

FIG. 17 shows the Faraday efficiencies for Hydrogen evolution reaction and for $CO_2$ reduction for different current densities obtained using the practical implementation illustrated in FIG. 16.

FIG. 18 illustrates the $CO_2$ uptake for sol-gel synthesized TFSI-based ionic liquid-silica composites.

Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a mesoporous host matrix, reference is made to a material that contains pores with diameters ranging between 2 and 200 nm. In embodiments of the present invention the host matrix may comprise micro- and microporous domains for high ionic liquid contents. The mesoporous nature allows it to effectively host other substances, like ionic liquids. In the context of the present invention, a mesoporous host matrix, such as silica, is used to immobilize an ionic liquid. In embodiments of the present invention the ionic liquid volume fraction of the ionic liquid immobilized in the pores of the mesoporous host matrix may be between 0% and 96% of the total volume of the host matrix or even between 40% and 96%, or even between 60% and 96% or even between 84% and 96% of the total volume of the host matrix. This fraction may be measured after extraction of the ionic liquid. The ionic liquid volume fraction may for example be checked via thermal gravimetric analysis wherein the mass of the mesoporous host matrix is measured after removing the ionic liquid by heating.

In a first aspect, embodiments of the present invention relate to a method for gas-phase $CO_2$ reduction. FIG. 4 illustrates the method steps involved in the gas-phase $CO_2$ reduction process, as described in the invention. The method begins with step 110, which involves providing a composite electrolyte (210) that comprises an ionic liquid (212) incorporated within a mesoporous host matrix (211). The composite electrolyte functions as a dual sorbent for $CO_2$ and $H_2O$, providing ionic conductivity. In step 120, the composite electrolyte (210) is exposed to a gas stream comprising $CO_2$, which is subsequently sorbed into the composite electrolyte. Finally, step 130 involves the electrochemical reduction of the sorbed $CO_2$ at an interface between the composite electrolyte (210) and a catalyst (220), with the composite electrolyte functioning as both a sorbent and ionic conductor to facilitate the electrochemical reaction.

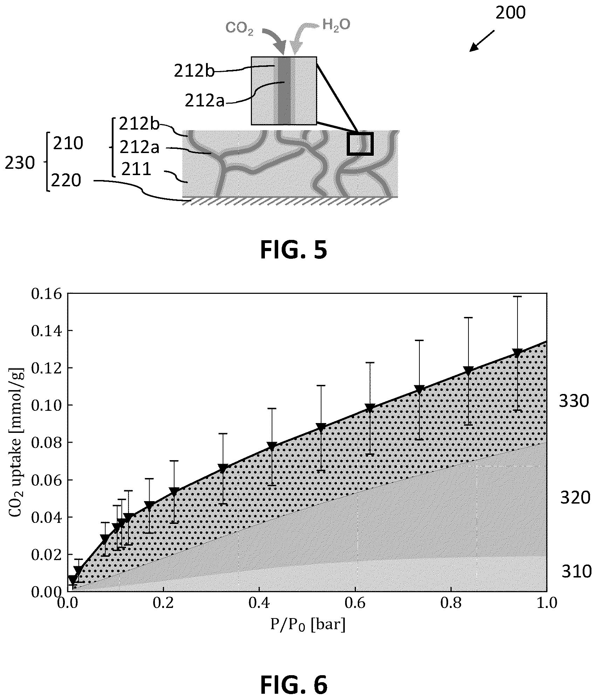

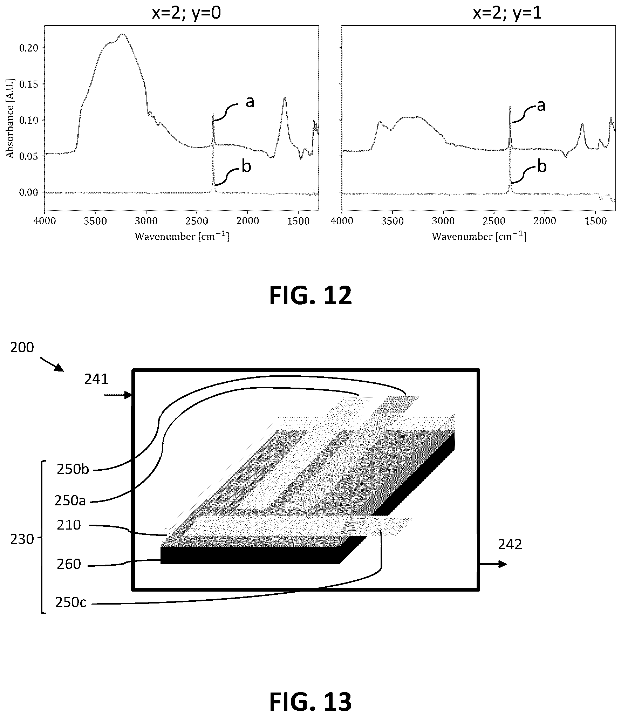

In a second aspect, embodiments of the present invention relate to a system (200) for gas-phase $CO_2$ reduction (see for example FIG. 5 and FIG. 13). The system comprises a composite electrolyte (210) that includes an ionic liquid (212) incorporated in a mesoporous host matrix (211), where the composite electrolyte (210) provides ionic conductivity and functions as a dual sorbent for $CO_2$ and $H_2O$. The system also includes an sorbent-catalyst assembly (230) comprising a catalyst (220) interfacing with the composite electrolyte (210) wherein the sorbent-catalyst assembly (230) is configured such that, in operation, $CO_2$ sorbed in the composite electrolyte (210) is reduced at the interface between the composite electrolyte (210) and the catalyst (220).

In embodiments of the present invention an electrochemical cell comprises a working electrode (250a) in contact with the composite electrolyte and a counter electrode (250b) to balance the charge in the cell by completing the circuit during the electrochemical process. A system in accordance with embodiments of the present invention may comprise such an electrochemical cell.

In embodiments of the present invention the electrochemical cell comprises a pseudo-reference electrode (250c) to provide a stable reference potential.

In embodiments of the present invention the mesoporous host may comprise silica. In embodiments of the present invention the ionic liquid (212) is selected from the group comprising bis(trifluorosulfonyl)imide-based ionic liquids.

In embodiments of the present invention the gas stream also comprises $H_2O$ which is sorbed into the composite electrolyte (210). In embodiments of the present invention the provided (110) composite electrolyte (210) comprises a hydrophobic modification of the host matrix (211) for maintaining decoupled transport of $CO_2$ and $H_2O$ within the composite electrolyte.

In embodiments of the present invention the silica host matrix (211) is modified with methyl sidechains to decrease the hydrophilicity of the host matrix (211). The modification of the silica host matrix (211) may for example be achieved using methyltrimethoxysilane. The ratio of methyltrimethoxysilane to tetraethyl orthosilicate used to form the silica host matrix is varied may for example be selected to obtain a specific hydrophobicity of the host matrix (211).

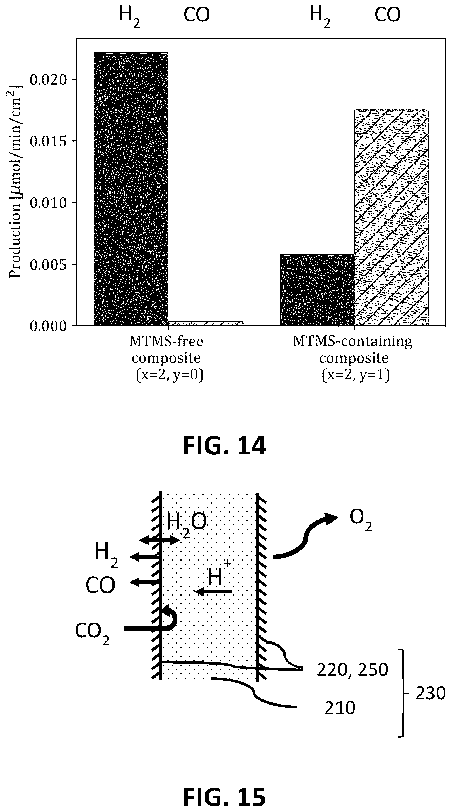

FIG. 5 shows an sorbent-catalyst assembly (230) comprising a composite electrolyte (210) interfacing with a catalyst (220) for a gas-phase $CO_2$ reduction system in accordance with embodiments of the present invention. Please note that for simplicity of the figure no electrodes are shown. Examples of an sorbent-catalyst assembly with electrodes are shown in FIG. 13 and FIG. 15 (in these graphs the catalyst and electrode are one same metal).

At the catalyst interface, the following reactions may occur:

In an alkaline environment: $aCO_2 + bH_2O + ce^- \rightarrow Product + dOH^-$ In an acidic environment: $aCO_2 + bH^+ + ce^- \rightarrow Product + dH_2O$

The ionic liquid (212) is incorporated within a mesoporous host matrix (211), for example comprising silica. For illustrative purposes, only a limited number of channels are shown; however, in reality, the composite comprises a significantly higher volumetric ionic liquid fraction, contained in a largely interconnected network. $H_2O$ is expected at the interface of the silica, indicated by 212b, while $CO_2$ is expected ionic liquid region of the channel, indicated by 212a. The silica, by its nature, remains predominantly hydrophilic; for a ratio of 1 mole of TEOS to 1 mole of MTMS, only one in eight Si bonds will be -$CH_3$ instead of O. Therefore, it is expected that a water layer will still be present at the silica interface with the channel, with its thickness depending on the relative humidity. An ionic conductivity ranging from 1.8 to 2.8 mS/cm was obtained for relative humidities ranging from 7 to 90%, for an ionic liquid-to-TEOS molar ratio of 2, and methyl functionalization with MTMS-to-TEOS molar ratio of 1. For non-methyl modified ionic liquid-silica composites, a maximum uptake was reached around 0.13 mmol/g for x=0.5 and 2 mol [BMP][TFSI]: mol $SiO_2$ at 303 K and 1 bar, 0.12 mmol/g for x=1 and 0.10 mmol/g for x=1.5. A 5:1 molar selectivity of $CO_2$ sorption compared to $N_2$ was assessed under dynamic conditions from a 50-50 vol% feed.. Additionally, the water uptake of composites at 85% RH was assessed for different ionic liquid-to-SiOz contents and for various MTMS-to-TEOS contents, spanning from 0.3 to 2.3 mmol/g. Thus, by modifying the $SiO_2$ hydrophobicity, the $H_2O$ uptake can be tuned.

Different problems may be solved by a method and system in accordance with embodiments of the present invention amongst which: limited $CO_2$ solubility in aqueous $CO_2$ electroreduction; loss of $CO_2$ to the bicarbonate equilibrium in alkaline aqueous electrolyte, complicating the electrode surface pH control and reducing selectivity for $CO_2$ reduction products.

Another problem that may be solved by a method and system in accordance with embodiments of the present invention is the competition between $H_2O$ and $CO_2$ for sorption which is needed for lower energy of regeneration.

The first problem is the low solubility of $CO_2$ in aqueous electroreduction processes. This issue is solved by using a composite electrolyte (210) with an ionic liquid (212) incorporated within a mesoporous host matrix (211), which enhances $CO_2$ uptake and provides ionic conductivity.

The $CO_2$ sorption from flue gas-like streams was studied using $CO_2$ adsorption isotherms at 303 K. The confinement of the ionic liquid within the silica matrix was found to enhance $CO_2$ uptake, particularly at lower partial pressures and with higher ratios of ionic liquid to host matrix. The uptake for a nanocomposite with a composition ratio of 2 (mol ionic liquid: mol $SiO_2$) at different partial pressures is shown as the top curve in FIG. 6. The $CO_2$ uptake capacity was approximately 0.03 mmol/g of the composite at 0.1 bar and about 0.125 mmol/g at 1 bar. A breakdown of the expected uptake was included to evaluate the performance of the composite relative to its individual components-namely silica and [BMP][TFSI]. The expected uptake for pure $SiO_2$ (310) represents the uptake per unit surface area normalized to the $SiO_2$ weight fraction in the composite. The expected uptake for [BMP][TFSI], indicated by reference number (320), is based on its reported uptake at various partial pressures. The region indicated by reference number (330), indicates the uptake enhancement, which is the difference between the actual uptake of the nanocomposite and the sum of the expected uptake for the individual components.

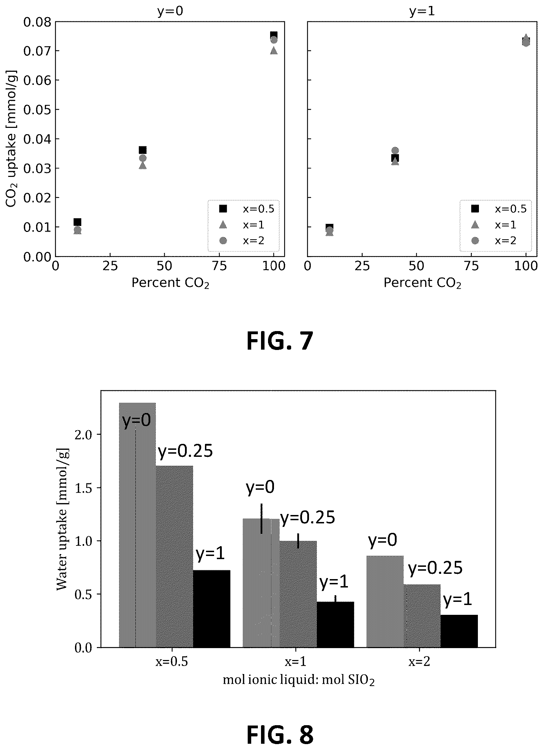

The modification of the silica network with methyl sidechains was explored to decrease the hydrophilicity of the silica network. In an exemplary embodiment of the present invention the functionalization was achieved by varying the silica precursors and their ratio, namely TEOS and MTMS. The silica-to-ionic liquid molar ratio, denoted x, was varied between 0.5 and 2. The MTMS-to-TEOS molar ratio, denoted y, was varied between 0 and 1. These variations in nanocomposite composition did not appear to impact the $CO_2$ uptake in dry environments, as exemplified in FIG. 7.

In this exemplary embodiment of the present invention the materials synthesized were shown to have a conductivity around 2 mS/cm (between 1.14 - 2.75 mS/cm) for different compositions and relative humidity ranging from 5 - 90%, as measured by impedance spectroscopy for coated films on interdigitated electrode assemblies. The conductivity was seen to increase with relative humidity for all measured samples. The obtained results are in the order of magnitude of typical ionic liquid conductivities (~2mS/cm) and electrolytes used in electrochemical cells (~10mS/cm).

Another problem which may be solved by a system or method in accordance with embodiments of the present invention is the competition between $H_2O$ and $CO_2$ sorption in nanocomposites. As discussed before this is solved by a composite electrolyte which comprises a hydrophobic modification of the host matrix (211) for maintaining decoupled transport of $CO_2$ and $H_2O$ within the composite electrolyte. In embodiments of the present invention the $H_2O$ and $CO_2$ transport are decoupled by decreasing the silica network hydrophilicity, thereby providing control over the respective $CO_2$

and water uptake.

In embodiments of the present invention the $CO_2$ and $H_2O$ uptake were successfully decoupled by the addition of a methyl group in the host matrix (e.g. silica structure). To achieve this, in an exemplary embodiment of the present invention, a MTMS precursor was used in combination with TEOS, with their molar ratio defined as y (mol MTMS:mol TEOS). As shown in FIG. 8, higher silica contents (lower x, mol IL: mol $SiO_2$) resulted in higher water uptake, while addition of MTMS decreased the water uptake.

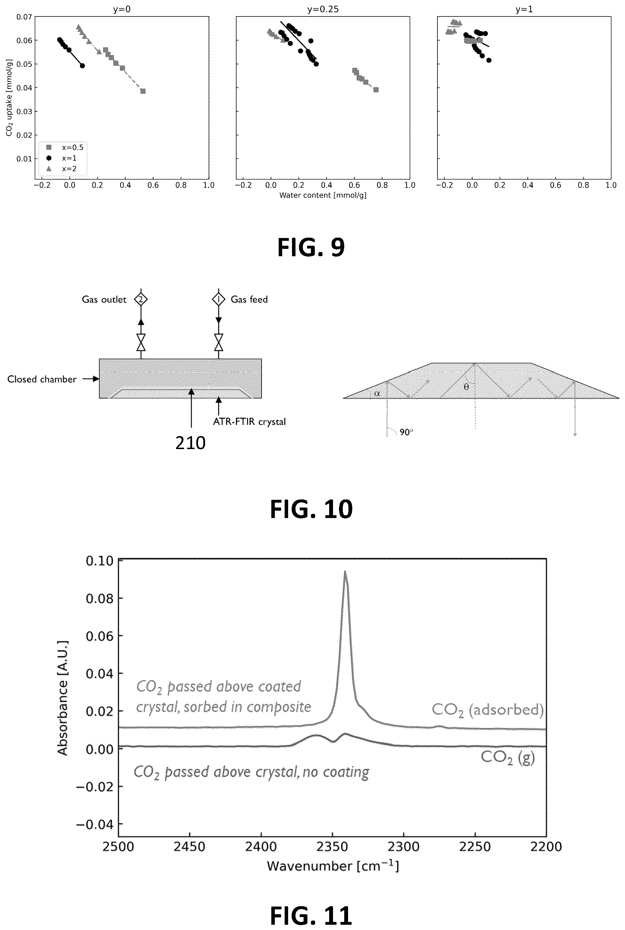

In embodiments of the present invention a non-competitive $CO_2/H_2O$ uptake is achieved by addition of MTMS. This modifies the silica host matrix with methyl sidechains and decreases hydrophilicity of the host matrix. Many sorbent $CO_2$ materials showcase $CO_2$ displacement in presence of $H_2O$, resulting in lower $CO_2$ uptake in humid environment. In an exemplary embodiment of the present invention MTMS was added to a host matrix, which has an ionic liquid-to-silica molar ratio of x=2, with a MTMS: TEOS molar ratio of 1, resulting in a constant $CO_2$ uptake for the synthesized nanocomposite, regardless of the relative humidity in the feed stream. FIG. 9 shows the $CO_2$ uptake as a function of the water content in nanocomposites with silica: ionic liquid molar ratio x varied between 0.5 and 2, and MTMS: TEOS molar ratio y, varied between 0 and 1. The samples were exposed to high relative humidity, and the $CO_2$ uptake was measured by thermogravimetric analysis with He as carrier gas, at a total gas flow rate of 25 mL/min. Results were corrected with an empty pan measurement to account for buoyancy effects of the pan volume, and corrected for the additional sample volume based on the sample density. Subsequent drying steps were implemented via Thermal Gravimetric Analysis (TGA), and between each drying step, the uptake was measured again. As visible in FIG. 9, MTMS contents equal to 1 for x=0.5 and x=2 yield the flattest slopes, that is, the least dependence of $CO_2$ uptake with regards to $H_2O$ content. Note that the water content range over which the measurement is performed is not directly equal to the equilibrium water uptake measured for the composites. Equilibration time prior to the dynamic measurement, performed in order to have a stable baseline, resulted in water evaporation. Even though the amount of sample loaded was kept around 50mg, some variations in amount and particle size of the sample loaded can have an influence on the water desorption rate. Some slightly negative water contents are reported, which can be attributed to measurement errors from the water uptake.

The previous results, obtained using exemplary embodiments of the present invention, showed no dependency of $CO_2$ uptake on water content for higher MTMS contents (1 mol MTMS:mol TEOS). Complementarily to these results, ATR-FTIR was used to evidence that under high relative humidity flows, $CO_2$ is not being displaced by $H_2O$. As visible on FIG. 10 (left hand side), an ATR-FTIR crystal was coated with a composite electrolyte, as used in embodiments of the present invention, and mounted in a gas-tight cell. The chamber of the cell was flushed under a gas flow, either dry $N_2$, dry $CO_2$, or humidified $CO_2$ (85% relative humidity). The incident beam passes via the bottom of the crystal, as depicted on the right hand side of the figure, before being reflected over its length. The resulting signal detected showcases the chemistry present in the layer, given that the thickness of the coating is higher than the penetration depth of the IR beam.

For each sample, a background transmission spectrum was measured under dry $N_2$ until a stable signal was obtained. $CO_2$ in the gas form has four vibrational modes: symmetric and asymmetric stretching, and two degenerate bending modes. Its asymmetric stretching mode produces two peaks at 2337 cm$^{-1}$ and 2362 cm$^{-1}$ accounting for P- and R-branches corresponding to the coupling of rotational-vibrational excitations. These can be seen in the bottom curve which shows ATR-FTIR differential spectra for $CO_2$ gas. Subsequently, dry $CO_2$ was passed and a differential absorption spectrum could be obtained. Upon sorption in the composite electrolyte, the asymmetric stretch signature changes shape, with a marked peak at the position of the previously defined P-branch, and a shoulder at lower frequencies. This can be seen in the top curve in FIG. 11.

FIG. 12 shows the differential absorbance spectrum measured under humidified $CO_2$ gas (curves a) and dry $CO_2$ gas (curves b) with respect to a dry $N_2$ background in an ATR-FTIR flow cell set-up for a $CO_2$ sorbent nanocomposite coating with ionic liquid-to-silica molar ratio of x=2, and MTMS-to-TEOS molar ratios of y=0 (i.e. without MTMS; left graph) or 1 (i.e. with MTMS; right graph). The subtracted background was measured under dry $N_2$ flow. Upon humidification of the $CO_2$ stream, water peaks at 1650 cm$^{-1}$ and in the 3000-3500 cm$^{-1}$ range became visible. The MTMS-free samples with x=2 mol IL:mol $SiO_2$ showed a dry-to-humid P-branch peak height ratio of 0.71, which implies a competition between $H_2O$ and $CO_2$ uptake. On the other hand, the MTMS:TEOS containing sample with a molar ratio of y=1 showcased a P-branch peak ratio of 0.94, thereby showing little-to-no competition between $H_2O$ and $CO_2$ uptake, as previously shown from the TGA analysis. The peak height under humid environment was monitored periodically for 85 min, and no further decrease was observed for the sample with and without MTMS.

Another problem which may be solved by a system or method in accordance with embodiments of the present invention is that loss of $CO_2$ due to the formation of bicarbonate in aqueous electrolytes complicates pH control at the electrode surface, reducing the selectivity for $CO_2$ reduction products. In embodiments of the present invention this is solved by performing $CO_2$ reduction in the gas phase, in absence of liquid electrolyte. Instead, a nanocomposite electrolyte enables decoupled $H_2O$ and $CO_2$ transport.

FIG. 13 shows a schematic drawing of a system (200) for gas phase $CO_2$ reduction in accordance with embodiments of the present invention. The figure shows a sorbent-catalyst assembly (230) comprising a catalyst (220) interfacing with the composite electrolyte (210) a working electrode (250a) in contact with the composite electrolyte, a counter electrode (250b), and a pseudo-reference electrode (250c). During operation of such a cell, $CO_2$ sorbed in the composite electrolyte (210) is reduced at the interface between the composite electrolyte (210) and the catalyst (220). The sorbent-catalyst assembly (230) was obtained by depositing the composite electrolyte (210) onto a non-conductive wafer substrate (260) with three electrodes: the working electrode (250a) which may for example be a silver working electrode, the counter electrode (250b) which may for example be a platinum counter electrode, and the pseudo-reference electrode (250c) which may for example be a silver pseudo-reference electrode. In this exemplary embodiment of the present invention the electrodes are made of catalyst material, i.e. Ag (cathode 250a) and Pt (anode, 250b).

The invention is not limited to the design shown in FIG. 13. Also other designs are possible. It is for example possible to have an electrochemical cell comprising a sorbent-catalyst assembly with interdigitated electrodes.

For obtaining the production rate (expressed in $\mu$mol/min/cm$^2$) of this sorbent-catalyst assembly, the assembly was placed in a chamber under a humidified $CO_2$ stream (241 is the gas feed, 242 is the gas outlet). $CO_2$ reduction was successfully performed directly from the sorbent layer at a current density of -0.13 mA/cm$^2$. $CO_2$ reduction products were measured at the outlet of the chamber by gas chromatography. The production rate towards CO, a $CO_2$ reduction product, was much higher for the MTMS-containing sample compared to the MTMS-free sample (FIG. 14). On the other hand, the Hydrogen Evolution Reaction (HER, the conversion of protons to $H_2$) was inhibited for the MTMS-containing sample.

FIG. 15 shows a conceptual drawing of a sorbent-catalyst assembly (230), comprising a composite electrolyte (210) between two electrodes (250), of a system in accordance with embodiments of the present invention. In embodiments of the present invention the sorbent-catalyst assembly (230) is configured such that, in operation, $CO_2$ sorbed in the composite electrolyte (210) is reduced at the interface between the composite electrolyte (210) and the catalyst (220). In this exemplary embodiment of the present invention the sorbent-catalyst assembly is configured as a vapor-fed Membrane Electrode Assembly set-up with $CO_2$/$H_2O$ sorbent separator. The composite electrolyte (210) has three functions: it acts as a $CO_2$/$H_2O$ sorbent and transport medium, as a separator and as an ionic conductor. The sorbent-catalyst assembly comprises high surface area porous electrodes at both sides of the composite electrolyte (210). These serve both as electrodes (250) and as catalyst (220).

In embodiments of the present invention the system may be an electrolyser comprising a sorbent-catalyst assembly in a membrane electrode configuration for gas phase operation.

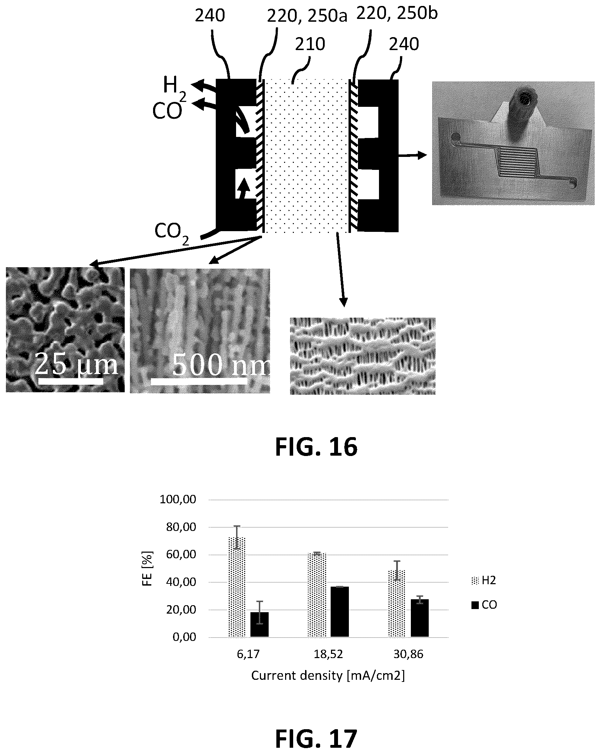

FIG. 16 provides a practical implementation of an electrolyser comprising a Membrane Electrode Assembly in accordance with embodiments of the present invention. The composite electrolyte (210) serves as the medium where $CO_2$ and $H_2O$ are sorbed and subsequently transported to the catalyst interface for electrochemical reactions. In this implementation, the composite electrolyte could be a sorbent-impregnated porous matrix, such as Celgard, which is shown in the SEM image at the bottom of the figure. A MTMS-modified sorbent solid composite electrolyte may be used. The invention is, however, not limited thereto. Any non-chemically active porous material, with mechanical stability, high porosity and preferably a minimal thickness is adequate. In this example a polypropylene membrane with 55% porosity and 25 $\mu$m thickness was used (Celgard 2500).

The catalysts (220) which also serves as electrodes (250) to facilitate the electrochemical reduction of $CO_2$, directly interface with the composite electrolyte to enable efficient conversion of the sorbed $CO_2$ into valuable products. The high surface area porous electrodes (250) provide both catalytic activity and electrical contact. The working electrode (250a), which may be a silver electrode, is shown in the SEM images at two different scales-a 25 $\mu$m scale depicting a porous silver structure and a 500 nm scale illustrating a silver nanomesh. These structures provide a high surface area for enhanced reaction kinetics. The counter electrode (250b) may be a platinum (Pt) felt or nanomesh, serving as the complementary electrode in the cell to complete the electrochemical circuit.

Electrolysers in accordance with embodiments of the present invention may comprise flow fields. In alternative systems the flow fields may be integrated into a device.

The gas distribution systems (240) are used to provide flow fields for efficient gas distribution and also serve as electrical contacts for the cell. These systems ensure that $CO_2$ and $H_2O$ are effectively delivered to the active sites within the composite electrolyte and maintain proper operation of the sorbent-catalyst assembly. Overall, the combination of a high surface area porous electrode, a well-distributed gas supply, and a sorbent-impregnated composite electrolyte ensures a good performance for the electrochemical reduction of $CO_2$. The SEM images illustrate the specific structural properties of the electrodes and electrolyte, highlighting the porosity and nanostructures that enhance the efficiency of the cell.

At the working electrode (250a) the following reaction occurs:

$$CO_2 + 2e^- + 2H^+ \ 4 \ CO + H_2O$$

This represents the reduction of $CO_2$ to carbon monoxide (CO) with the simultaneous production of water.

At the counter electrode (250b) the following reaction occurs:

$$2H_2O \rightarrow O_2 + 4e^- + 4H^+$$

This is the oxidation of water, which produces oxygen gas ($O_2$), releases electrons, and generates protons (H+). These complementary reactions at the electrodes complete the electrochemical process of $CO_2$ reduction in the cell.

In an exemplary embodiment of the present invention, the cathode, which serves as working electrode 250a, consists of a titanium (Ti) felt used for electrical contact, combined with a commercially available porous silver (Ag) electrode. The anode, which serves as counter electrode, is composed of platinum (Pt) coated titanium (Ti) felt, also commercially available. The membrane used between the anode and cathode is a Celgard membrane filled with a silica-[BMP][TFSI] nanocomposite, which has been modified with methyltrimethoxysilane (MTMS) to enhance its properties.

The anode flow is supplied with 100 mL/min of humidified $CO_2$, while the cathode flow is maintained with 100 mL/min of dry $CO_2$. This arrangement facilitates different environmental conditions at each electrode, optimizing the reactions for efficient $CO_2$ reduction and oxygen evolution in the sorbent-catalyst assembly.

FIG. 17 shows the measured Faraday efficiency for different current densities. The Faraday Efficiency (FE) is calculated using the following formula:

$$FE[\%] = \frac{charge\ used\ for\ product\ formation}{total\ charge\ passed} = \frac{zNF}{Q}$$

Where:

Q is the total charge passed,

N is the number of moles electrolyzed,

z is the number of electrons involved in the reaction,

F is the Faraday constant

The Faraday efficiency represents the percentage of the total charge that is used for the formation of the desired product. The error bars in FIG. 17 show the upper and lower Faraday efficiency measured for 2 subsequent measurements. The Membrane Electrode Assembly achieved a higher current density compared to the planar configuration (comprising a planar substrate onto which 3 electrodes are deposited as illustrated in FIG. 13), while also operating at a lower cell potential. CO production was still observed. Additionally, the total Faradaic efficiency $FE_{CO}+FE_{H2}$ was close to 100%, as parasitic reactions involving anodic products were effectively prevented-an improvement over the planar setup where such side reactions were present.

In embodiments of the present invention, the method comprises producing the composite electrolyte using a one-pot sol-gel method. The sol-gel method enables in-situ confinement of the ionic liquid in the mesoporous host matrix. The use of a one-pot synthesis method allows for conformal coatings of $CO_2$ sorption nanocomposites, which enhances the supply of $CO_2$ to the electrode. In an exemplary embodiment of the present invention the sol-gel synthesis of ionic liquid-silica nanocomposites involves a one-pot synthesis process using formic acid, [BMI][TFSI] (1-butyl-3-methylimidazolium bis(trifluoromethylsulfonyl)imide), and TEOS (tetraethyl orthosilicate). Initially, the components are mixed in solution, and as the reaction proceeds, the solution undergoes a transition to a gel state. The synthesis process includes a series of hydrolysis and condensation reactions:

$$[Si]\text{-}OR + HO\text{-}(C=O)\text{-}H \rightarrow [Si]\text{-}O\text{-}(C=O)\text{-}H + ROH \qquad (1)$$

$$[Si]\text{-}O\text{-}(C=O)\text{-}H + ROH \rightarrow [Si]\text{-}OH + RO\text{-}(C=O)\text{-}H \qquad (2)$$

$$[Si]\text{-}OH + HO\text{-}(C=O)\text{-}H \rightarrow [Si]\text{-}O\text{-}(C=O)\text{-}H + H_2O \qquad (3)$$

$$[Si]\text{-}OH + [Si]\text{-}O\text{-}(C=O)\text{-}H \rightarrow [Si]\text{-}O\text{-}[Si] + HO\text{-}(C=O)\text{-}H \qquad (4)$$

The condensation reaction (4) results in the formation of a silica network, which encapsulates the ionic liquid, creating a nanocomposite structure. This encapsulation effectively integrates the ionic liquid within the silica matrix, providing a dual-functional material for enhanced $CO_2$ uptake and electrochemical performance. In embodiments of the present invention compounds may be added in the initial solution for attaching methyl sidechains to the silica matrix (for example MTMS may be added).

Alternative methods, such as impregnation and grafting, may be used for producing the composite electrolyte. In impregnation methods, pre-synthesized or commercial silica particles are mechanically mixed with an ionic liquid, until a gel is obtained.

Various ionic liquids can be used in the composite electrolyte to enhance $CO_2$ sorption and provide ionic conductivity. Examples include imidazolium-based ionic liquids, such as 1-ethyl-3-methylimidazolium (EMI) and 1-octyl-3-methylimidazolium (OMI), as well as pyrrolidinium-based ionic liquids like 1-butyl-1-methylpyrrolidinium bis(trifluoromethylsulfonyl)imide ([BMP][TFSI]). These ionic liquids were chosen for their $CO_2$ sorption properties, which ensure that $CO_2$ can be efficiently adsorbed without forming covalent bonds, allowing for easier and energy-efficient desorption during regeneration. The selection of ionic liquids can be tailored based on the specific requirements of the application, including factors like $CO_2$ partial pressure, operational temperature, and desired sorption capacity.

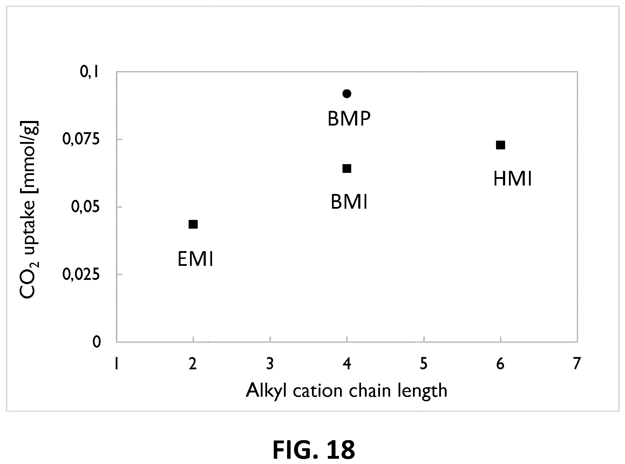

FIG. 18 illustrates the $CO_2$ uptake for sol-gel synthesized TFSI-based ionic liquid-silica composites at a pressure of 0.4 bar. The figure shows the performance of different ionic liquid cations, specifically EMI (1-ethyl-3-methylimidazolium), BMI (1-butyl-3-methylimidazolium), HMI (1-hexyl-3-methylimidazolium), and BMP (1-butyl-1-methylpyrrolidinium), all with TFSI (bis(trifluoromethylsulfonyl)imide) as the anion.

The confinement of the ionic liquid within the silica matrix results in a $CO_2$ uptake that is six times higher compared to the uptake of the non-confined ionic liquid at a partial pressure of CO2 ($P_{CO2}$) of 0.4 bar. This significant enhancement in uptake highlights the positive impact of the confinement effect on improving $CO_2$ sorption capacity in the nanocomposite material.

## Claims

1. A method (100) for gas-phase $CO_2$ reduction, comprising:

    - providing (110) a composite electrolyte (210) with an ionic liquid (212) incorporated within a mesoporous host matrix (211), wherein said composite electrolyte functions as a dual sorbent for $CO_2$ and $H_2O$, and provides ionic conductivity,
    - exposing (120) the composite electrolyte (210) to a gas stream comprising $CO_2$, wherein $CO_2$ is sorbed into the composite electrolyte (210),
    - electrochemically reducing (130) the sorbed $CO_2$ at an interface between the composite electrolyte (210) and a catalyst (220), wherein the composite electrolyte (210) acts as both a sorbent and ionic conductor to facilitate the electrochemical reaction.

2. The method (100) according to claim 1, wherein the gas stream also comprises $H_2O$ which is sorbed into the composite electrolyte (210) and wherein the provided (110) composite electrolyte (210) comprises a hydrophobic modification of the host matrix (211) for maintaining decoupled transport of $CO_2$ and $H_2O$ within the composite electrolyte.

3. The method according to any of the previous claims, wherein the mesoporous host comprises silica.

4. The method (100) according to claim 3, wherein the silica host matrix (211) is modified with methyl sidechains to decrease hydrophilicity of the host matrix (211).

5. The method (100) according to claim 4, wherein the modification of the silica host matrix (211) is achieved using methyltrimethoxysilane.

6. The method (100) according to claim 5, wherein the ratio of methyltrimethoxysilane to tetraethyl orthosilicate used to form the silica host matrix is varied to decrease the hydrophilicity of the host matrix (211).

7. The method (100) according to claim 1, wherein the ionic liquid (212) is selected from the group comprising bis(trifluorosulfonyl)imide-based ionic liquids.

8. A system (200) for gas-phase $CO_2$ reduction, comprising:

    - a composite electrolyte (210) comprising an ionic liquid (212) incorporated in a mesoporous host matrix (211), wherein said composite electrolyte (210) provides ionic conductivity and functions as a dual sorbent for $CO_2$ and $H_2O$,
    - a sorbent-catalyst assembly (230) comprising a catalyst (220) interfacing with the composite electrolyte (210),

where $CO_2$ sorbed in the composite electrolyte (210) is reduced at the interface between the composite electrolyte (210) and the catalyst (220).

9. The system according to claim 8, wherein the host matrix (211) is hydrophobically modified to decouple the transport of $CO_2$ and $H_2O$ sorbed in the composite electrolyte (210).

10. The system (200) according to any of the claims 8 or 9, wherein the mesoporous host matrix (211) comprises silica.

11. The system (200) according to claim 10, wherein the silica host matrix (211) is modified with methyl sidechains to decrease the hydrophilicity of the host matrix (211).

12. The system (200) according to claim 11, wherein the modification of the silica host matrix (211) is achieved using methyltrimethoxysilane.

13. The system (200) according to claim 12, wherein the ratio of MTMS to tetraethyl orthosilicate (TEOS) used to form the silica matrix is selected to obtain a desired hydrophilicity of the host matrix (211).

14. The system (200) according to any of the claims 8 to 13, wherein the ionic liquid (212) is selected from the group consisting of bis(trifluorosulfonyl)imide-based ionic liquids.

15. The system (200) according to any of the claims 9 to 13, further comprising a gas distribution system (240) for supplying gas to the composite electrolyte (210) and for retrieving gas from the composite electrolyte (210).

FIG. 1 (prior art)

FIG. 2 (prior art)

10          20

## FIG. 3 (prior art)

100

110   Providing composite electrolyte

120   Exposing to gas stream

130   Electrochemically reducing $CO_2$

## FIG. 4

**FIG. 5**

**FIG. 6**

**FIG. 7**

**FIG. 8**

**FIG. 9**

**FIG. 10**

**FIG. 11**

FIG. 12

FIG. 13

**FIG. 14**

**FIG. 15**

## FIG. 16

## FIG. 17

**FIG. 18**

Europäisches
Patentamt
European
Patent Office
Office européen
des brevets

# EUROPEAN SEARCH REPORT

**Application Number**

EP 24 20 7600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN QIAN ET AL: "Electroreduction of low concentration CO2 at atomically dispersed Ni-N-C catalysts with nanoconfined ionic liquids", APPLIED CATALYSIS B. ENVIRONMENTAL, ELSEVIER, AMSTERDAM, NL, vol. 304, 27 November 2021 (2021-11-27), XP086919231, ISSN: 0926-3373, DOI: 10.1016/J.APCATB.2021.120963 [retrieved on 2021-11-27] | 1,2,7-9, 14,15 | INV. C25B1/23 C25B3/03 C25B3/07 C25B3/26 C25B11/032 C25B15/08 |
| A | * pages 2-7; figures 1-3 * | 3-6, 10-13 | |
| T | MOHAMMED SULAFA ABDALMAGEED ET AL: "Elucidation of the Roles of Ionic Liquid in CO2 Electrochemical Reduction to Value-Added Chemicals and Fuels", MOLECULES, vol. 26, no. 22, 18 November 2021 (2021-11-18), page 6962, XP093271179, CH ISSN: 1420-3049, DOI: 10.3390/molecules26226962 * page 2 - page 5; figures 2,4 * | 1-15 | TECHNICAL FIELDS SEARCHED (IPC) C25B |
| T | YANG DEXIN ET AL: "Electroreduction of CO2 in ionic liquid-based electrolytes", THE INNOVATION, vol. 1, no. 1, 21 May 2020 (2020-05-21), page 100016, XP093024413, DOI: 10.1016/j.xinn.2020.100016 * page 5, section "Heterogenous Electrocatalysts", figure 4 * | 1-15 | |

-/--

The present search report has been drawn up for all claims

| Place of search | Date of completion of the search | Examiner |
|---|---|---|
| The Hague | 22 April 2025 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 20 7600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SADEGHZADEH SEYED MOHSEN: "A heteropolyacid-based ionic liquid immobilized onto fibrous nano-silica as an efficient catalyst for the synthesis of cyclic carbonate from carbon dioxide and epoxides", GREEN CHEMISTRY, vol. 17, no. 5, 1 January 2015 (2015-01-01), pages 3059-3066, XP093271173, GB ISSN: 1463-9262, DOI: 10.1039/C5GC00377F Retrieved from the Internet: URL:https://pubs.rsc.org/en/content/articl epdf/2015/gc/c5gc00377f> * pages 2 - page 5, Scheme 1; figure 5; table 1 * | 1-15 | |

-----

**TECHNICAL FIELDS SEARCHED (IPC)**

The present search report has been drawn up for all claims

| Place of search | Date of completion of the search | Examiner |
|---|---|---|
| The Hague | 22 April 2025 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)